# EUROPEAN PATENT APPLICATION

(11) **EP 2 940 947 A1**
(43) Date of publication of application: **04.11.2015**
(21) Application number: 14290130.5
(22) Date of filing: 30.04.2014
(51) Int. Cl.: H04L 12/721

(54) **Method for operating a communication network**

(71) Applicant: ALCATEL LUCENT, 92100 Boulogne-Billancourt (FR)
(72) Inventor: Ansorge, Stefan, 70435 Stuttgart (DE)
(74) Representative: DREISS Patentanwälte PartG mbB

(57) **Abstract**

It is proposed a method to operate a communication network, wherein a first node (A) is connected via a plurality of intermediate nodes with a second node (Z). A connection is associated with a first metric (202) and a second metric (204). It is determined a communication path (206) from the first node (A) to the second node (Z) along the intermediate nodes (B-K) by feeding results from a first optimization step regarding the first metric (202) to a second optimization step regarding the second metric (204) and feeding results from the second optimization step regarding the second metric (204) to the first optimization step regarding the first metric (202).

## Description

### Field of the invention

The invention relates to a method for operating a communication network.

### Background

The determination of shortest or cheapest paths or routes through complex communication networks comprising for example different layers and/or network nodes with special capabilities is a crucial aspect for establishing and administration of connections for communication between two or more nodes.

### Summary

In view of the prior art, it is an object of the disclosure to improve the determination of communication paths through a communication network. According to an embodiment a communication path from a first node to a second node along intermediate nodes is determined by feeding results from a first optimization step regarding a first metric to a second optimization step regarding a second metric and feeding results from the second optimization step regarding the second metric to the first optimization step regarding the first metric. This allows to determine a shortest and/or cheapest communication path with less computation effort taking into account the first and second metric.

### Brief description of the figures

Further features, aspects and advantages of the present invention are given in the following detailed description with reference to the drawings in which:
- Figure 1: schematic block diagram for operating a communication network;
- Figure 2a: shows a schematic optical network;
- Figure 2b: shows an open tree in schematic form;
- Figure 2c: shows a further determination step;
- Figure 2d: shows tree feasible reaching paths;
- Figure 3a: shows a further schematic optical network;
- Figure 3b: shows an open tree;
- Figure 3c: shows a reaching path;
- Figure 4: shows a further schematic communication network;
- Figure 5: shows a further schematic communication network; and
- Figure 6: shows shortest paths and a communication path in the network of figure 5.

### Description of the embodiments

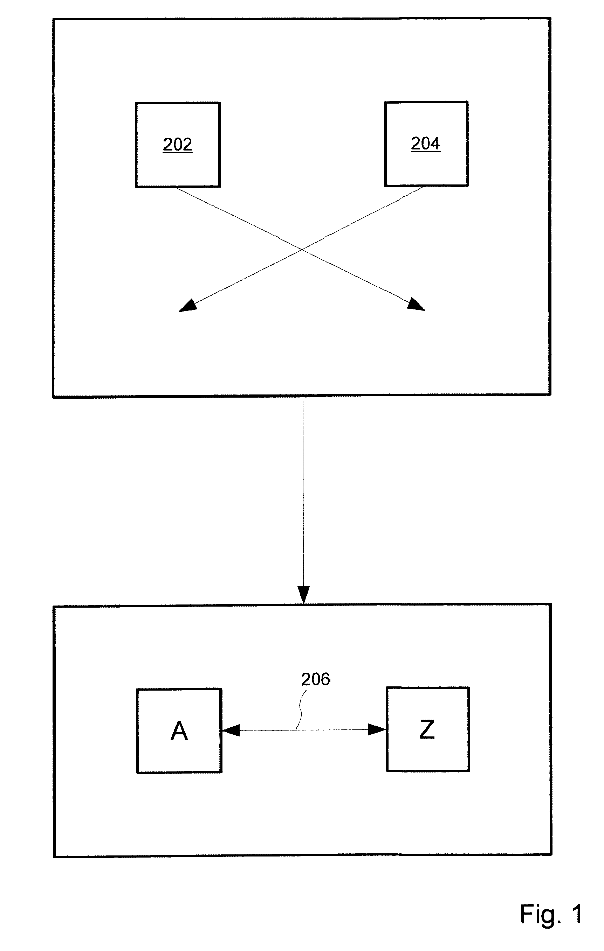

Figure 1 shows a schematic block diagram for operating a communication network. A communication path 206 between a first node A and a second node Z is determined by exchanging the results from a first and a second optimization step in order to find an optimized route in form the communication path 206. This is achieved by feeding results from a first optimization step regarding the first metric 202 to a second optimization step regarding the second metric 204 and feeding results from the second optimization step regarding the second metric 204 to the first optimization step regarding the first metric 202. The first node A is connected via a plurality of intermediate nodes, which are not shown in figure 1, with the second node Z. A connection between nodes or links is associated with a cost according to the first metric 202 and a cost according to the second metric 204, respectively.

Table 2 provides the function route in pseudo-code, wherein the pseudo-code is not intended to provide code ready to be compiled and executed. Table 2 is merely intended to show the solution according to this disclosure.

Line 1 of table 2 provides the name of the function, namely route, and the return pointer DISTANCE *, which points to a variable in which resides the result the function route returns, namely a list of nodes processed with their result. Furthermore line 1 provides the input variable from, which is the first node A to start the path. In this disclosure the wording path is equivalent with the wording route. Line 2 provides the input variable to, which is the second node Z, the desired destination of the path. Line 3 provides the variable tech to the function route, which is used as a layer indication which layer is requested. The route request operates only in its requested layer/technology. A server layer route can be requested by client layer but cannot be requested from server layer. Line 6 provides a graph W, which is a graph or a two-dimensional list of size n x n for representing the communication network in the form [from node, to node]. At least one metric in W is linked with a connection/link between two nodes, wherein for unused links or links that do not exist the metric is a maximum value, for example max_length which provides the maximum length or cost between two nodes. In line 8 the maximum number of nodes n is provided to process the n*n field. In line 9 the variable MAX_BUDGET is provided to the function route, wherein MAX_BUDGET is a constraint for the metric budget, the constraint representing a margin. In line 7 it is provided the variable cycle which is set to 0 at the client layer and to 1 in any server layer. A server.layer shall never call client or other server layer to avoid endless recursion. Furthermore a pointer *r_route is provided for storing the calculated path at the memory address of the pointer *r_route.

With respect to this disclosure, the term constraint may .refer to a layer specific constraint such as optical reach budget but may also refer to a network wide, layer independent constraint such as latency from the first to the second node.

The function route is divided into a first update step in lines 10 to 76 and a second update step in lines 77 to 116, which are executed in a sequence for each node according to line 9. At the start of the function route, the array or one-dimensional list P has the value zero for each node, which means that the node has not yet been visited by the function. This value zero for a node means that the node is labelled tentatively or not known. If the value is not zero the respective node is labelled permanent or known, which means that the function route has visited the respective node. Furthermore, the array P provides these two states tentatively labelled and permanent labelled not only for each node but also for at least two metrics, for example weight and budget as shown in lines 17 and 18.

In line 9 a loop for all potential nodes in the network is prescribed. In lines 10 to 14 it is looked for the next node that is not yet known (P[x]=0) but has the least weight (D[x,y]). The least link in the routing graph is taken for next processing. The procedure repeats until a route is found and there is no cheaper possible route (shortest route), or no more links for processing (failed).

According to line 9 and the respective two update steps, the first and second update steps are executed until all nodes A-Z are labelled permanent for at least one of the first metric weight and the second metric budget.

According to lines 1 and 10 to 19 the first node is selected as the working node last_P. In lines 10 to 19 a working node last_P is selected according to the first metric weight. For selecting the working node last_P a cost, which is represented by D[j].weight from the node j to the first node, is compared with the current least distance least_D. Furthermore, only nodes that are tentatively labelled, by evaluating the statement P[j].weight == 0, are considered. The result of the lines 10 to 19 is the determination of the node next_P which has the least cost according to the first metric weight to the first node. In line 17 the node j, next_P or last_P is labelled permanent for the first metric weight meaning that the respective node is reached by that last node. The respective path can be overwritten by better routes.

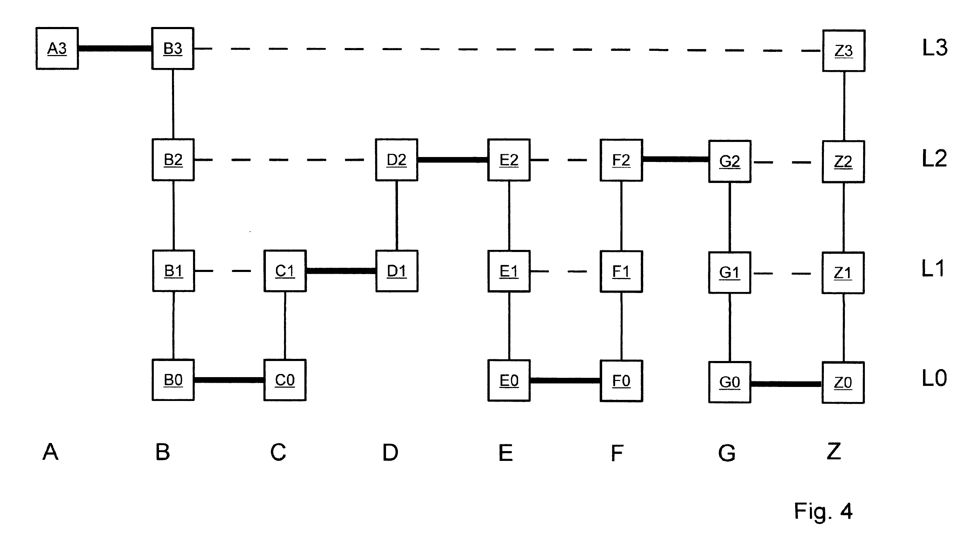

Lines 20 to 45 are referred to as a second or further determination step which can be repeated in a recursive fashion for each open path or each node on the open path. Each such repetition or recursion determines a respective further open path until determining the reaching path. This way multiple open paths may be determined in the form of intermediate paths between the first open path and the reaching path. In line 20 it is checked whether the working node last_P is a transitional link to the server layer, like it is done at a 3R node in the present code example. A 3R node recovers the optical signal by reamplification, reshaping and retiming of the received optical signal to establish a new optical signal based on the received optical signal for transmitting. Of course, a 3R node is only an example of a dedicated node as shown in figure 4.

Lines 22 to 29 determine a further or reaching path r_pred with the working node last_P as the source node. The first and/or second constraint MAX_BUDGET is related to a node cost and/or link costs according to a metric, for example weight or budget), wherein the first and/or second constraint MAX_BUDGET delimit a total cost which relates to a composition of the node costs and/or link costs along the respective path. The constraint MAX_BUDGET represents a margin valid for a respective layer.

Line 30 to 42 updates the routing graph pred from client layer with the result r_pred of the server layer. Only new or better hops than already known are added to the client layer routing graph.

In line 30 each node o is visited. According to line 32 the visited node o has to be marked tentatively to continue with line 36. It is determined in lines 33 and 34 whether the cost D[o].weight according to the metric weight from the visited node o to the first node from is greater than the sum of the cost D[last_P].weight according to the metric weight from the working node last_P to the first node from and the cost result[o].weight according to the metric weight through the further path &r_pred from the visited node o to the working node last_P. In lines 36 to 40 the costs D[o].weight and D[o].budget of the respective metric weight and budge for the visited node o are determined as a respective sum of the cost D[last_P].weight or D[last_P].budget) from the working node last_P to the first node from and the respective cost result[o].weight or result[o].budget from the visited node (o) to the working node last_P including 3R cost / server layer cost. In line 41 the working node last_P from the client layer is stored as a predecessor for the visited node o and in line 42 the further path r_pred is stored for the respective adjacent node o, therefore storing the route of the server layer between the node and the last client layer node stored in line 41.

At lines 46 to 57 it is checked for the new processed node determined in lines 10 to 16 and it is checked for links to the next adjacent nodes. It is checked whether the next adjacent nodes are already processed, provide a better route and whether the constraints match. If everything matches, the respective node is added to the result graph. In line 47 it is determined whether a new node was yet processed.

Line 46 optimizes for metric weight. The summary budget is accumulated as well in this route. When a new metric weighted path element is found it is checked whether the new point verified for the budget path element if already known or even better. So a metric path element may find new or better entries for budget. The same applies to line 77 to 106 with exchanged roles, meaning budget optimized routes find new or better entries for metric. So a metric optimized path may be blocked as all routes are determined but not feasible. When a budget optimized route continues it may find new elements for metric optimized routes that allows metric optimized routes to continue, as budget route took a different way to a node already processed by metric. So, the budget routes may find more or different elements as metric as it took a different route. Also, the metric route may find more or different elements as budget optimized routes as it took a different route. At the final end the route with the least metric is taken, which is not necessarily the budget optimized route.

In lines 48/49 it is determined whether a new route is better than the present route. In line 50 it is determined whether the link supports the requested layer technology. In lines 51/52 it is determined if the present constraint and the new link constraint are still in the respective limit range. In line 51/52 it is verified whether second cost budget for the metric optimized route is still in an allowed range based on the second cost. In lines 53 to 57 it is checked whether additional constraints, for example restricted connectivity, wavelength continuity match.

In line 47 it is checked whether the adjacent node k is labeled tentatively for the first metric weight. The statement in lines 48 and 49 is: the first cost D[k].weight of the adjacent node k is greater than the sum of the first cost D[last_P].weight from the first node to the working node last_P according to the first metric weight and the first cost W[last P][k].weight) between the working node last_P and the adjacent node k according to the first metric weight, meaning the new metric is better than the present. The statement in lines 50 and 91 is: the link between the working node last_P and the adjacent node k supports a required technology tech. The statement in lines 51, 52 and 92, 93 is: a constraint MAX_BUDGET for the second metric budget is greater than or equal the sum of the second or fourth cost D[last_P].budget, D[last_P].budget_b of the working node last_P and the cost W[last_P][k].budget between the working node last_P and the adjacent node k according to the second metric budget, meaning: is the budget of the new route in the permitted range. The statement in lines 53 to 55 and 94 to 96 is: no restricted connectivity. The statement in lines 56, 57 and 97, 98 is: the path from the first node to the working node last_P and the link between the working node last_P and the adjacent node k provide the same wavelength. The field W[][].restConn is in its simplest form a binary value allowing or not allowing to route data from a respective input to a respective output of a node and represents a further constraint. A value of W[][].restConn of zero means no constraint, different to zero that there is a given predecessor node.

In line 92/93 it is verified whether forth cost budget b for the budget optimized route is still in an allowed range.

Lines 59 to 64 update a new path entry vector metric, budget and wavelength with the metric of the previous entry added with the values of the new one.

The first update step comprises in lines 59 and 60, that a first cost D[k].weight according to the first metric weight is determined for the adjacent node by summing the first cost D[last_P].weight from the working node last_P to the first node and the cost W[last_P][k].weight according to the first metric weight from the working node last_P to the adjacent node k. The first update step further comprises in line 61 that a second cost D[k].budget according to the second metric budget is determined by summing the second cost D[last_P].budget from the working node last_P' to the first node and the cost W[last_P][k].budget according to the second metric budget from the working node last_P to the adjacent node k. In line 63 a fifth cost D[k].wavelength according to a third metric wavelength is set to the logical AND-operation of D[last_P].wavelength and W[last_P][k].wavelength. In line 65 the working node last_P is determined as a first predecessor pred[k].pred for the adjacent node k.

Cost may be a multi-dimensional, multi-fold vector. For each optimization constraint a respective sub-vector is used. Constraints are for example link metric, budget, latency, etc. Each sub-vector carries multi-fold contribution and values needed, for each optimization constraint as well as additional constraints such as wavelength. If optimization is done for cost weight and budget we have two sub-vectors, for weight and budget. In the present code example according to table 1 this difference is marked by no extension for metric optimized values and by the _b extension for budget optimized values. Of course, this difference can be embodied by other definitions.

In line 68 the second cost D[k].budget is compared with the fourth cost D[k].budget b, therefore evaluating a hop found by metric optimization for budget evaluation whether it is better than a route for budget; if so, the sub-vector for budget optimization of this hop is updated. The comparison in line 68 comprises the evaluation of the statement: the fourth cost D[k].budget is greater than the second cost D[k].budget_b. Therefore, line 68 checks whether a new element is better than known by the budget optimized route. When a new element is better according to line 68 then the respective element is added to the budget optimized path. In the subsequent line 107, it is checked whether this new element is better than known by the metric optimized path. If the new element is better according to line 107, then the new element is added to the metric optimized path.

In line 69 the value of the third cost D[k].weight_b is set to the value of the first cost D[k].weight. In line 70 the value of the fourth cost D[k].budget_b is set to the value of the second cost D[k].budget. In line 72 the working node last_P is set as the second predecessor pred[k].pred_b for the adjacent node k.

In lines 68 to 74 the results from the first optimization step according to lines 10 to 76 regarding the first metric weight are fed to the subsequent second optimization step according to lines 77 to 115 regarding the second metric budget. Line 86 checks whether the new element is better than known by the budget optimized route. If the new element is better than the known budget optimized route, it is started to add the element into the budget optimized path. Line 107 checks whether this new element is better than known by the metric optimized route. If the new element is better than known by the metric optimized route, then this element is added into the metric optimized path.

An update of the third cost of the first metric weight in line 69 is executed depending on a comparison of the second and fourth cost of the second metric budget in line 68. The lines 68 and 69 therefore constitute a transmittal of results of the first optimization step to the second optimization step in the first update step.

In lines 77 to 79 it is looked for the next best node for budget optimization.

In lines 77 to 86 a node from a set of at least one, for the second metric budget tentatively labeled nodes with the cheapest second metric budget is selected as the new working node last_P. For selecting the new working node last_P a cost, which is represented by D[j].budget from the node j to the first node, is compared with the current least distance least_D. Furthermore, only nodes that are tentatively labelled, by evaluating the statement P[j].budget == 0, are considered. The result of the lines 77 to 86 is the determination of the node next_P which has the least cost according to the second metric budget to the first node. In line 85 the node j, next_P or last_P is labelled permanent for the first metric weight. In the subsequent lines it is operated on the budget optimized sub-vector looking whether any of the next nodes can be added. The lines 46 to 76 on the other side optimize for weight/metric.

The results from the second optimization step according to lines 77 to 115 regarding the second metric budget are fed to the first optimization step according to lines 77 to 115 regarding the first metric weight in the next respective loop.

In lines 89, 90 the statement is: the fourth cost D[k].budget_b of the adjacent node k is greater than the sum of the fourth cost D[last_P].budget_b from the first node to the working node last_P according to the second metric budget and the cost W[last P][k].budget between the working node last_P and the adjacent node k according to the second metric budget.

The second update step comprises in line 100 that a third cost D[k].weight_b according to the first metric weight is determined. The first update step further comprises in line 102 that a fourth cost D[k].budget_b according to the second metric budget is determined.

In line 106 the working node last_P is determined as a second predecessor pred[k].pred_b for the adjacent node k.

Line 107 evaluates a hop found by budget optimization for weight evaluation whether it is better than a route for weight. If so, an update of the sub-vector for weight optimization is done for this hop. In line 107 a comparison of the first cost D[k].weight and the third cost D[k].weight_b is done. The comparison in line 107 comprises the evaluation of the statement: the first cost D[k].weight is greater than the third cost D[k].weight_b. The second update step comprises in line 108 setting the value of the first cost D[k].weight to the value of the third cost D[k].weight_b. In line 109 the value of the second cost D[k].budget is set to the value of the fourth cost D[k].budget_b. In line 111 the working node last_P is determined as the first predecessor pred[k].pred for the adjacent node k.

An update of the second cost of the second metric budget in line 109 is executed depending on a comparison of the first and third cost of the first metric weight in line 107. The lines 107 and 109 therefore constitute a transmittal of the results of the second optimization step to the first optimization step in the second update step.

**Table 1**

| | |
|---|---|
| **1** | DISTANCE * route (from, |
| **2** | to, |
| **3** | tech, |
| **4** | W, |
| **5** | n, |
| **6** | MAX_BUDGET, |
| **7** | cycle, |
| **8** | *r_route) { |
| **9** | for (i = 1; i < n; i++) { |
| **10** | least_D = 1 + n * max_length; |
| **11** | for (j = 1; j <= n ; j++) { |
| **12** | if(P[j].weight == 0 && D[j].weight < least_D){ |
| **13** | least_D = D[j]. weight; |
| **14** | next_P = j; |
| **15** | } |
| **16** | } |
| **17** | P[next_P].weight = from; |
| **18** | |
| **19** | last P = next P; |
| **20** | if ( ( last_P == 3Rnode ) && |
| **21** | ( cycle < 1 ) ) { |
| **22** | result = route ( last_P, |
| **23** | to, |
| **24** | tech, |
| **25** | W, |
| **26** | n, |
| **27** | MAX_BUDGET, |
| **28** | cycle+1, |
| **29** | &r_pred); |
| **30** | for (o = 1; o <= n; o++) { |
| **31** | if ( |
| **32** | P[o].weight == 0 && |
| | W[last_P][k].iscd & tech) != 0) && |
| **33** | D[last_P].weight + result[o].weight + server_layer_cost < |
| **34** | D[o].weight ) |
| **35** | { |
| **36** | D[o].weight = D[last_P].weight + |
| **37** | result[o].weight + server_layer_cost; |
| **38** | D[o].budget = D[last_P].budget + |
| **39** | result[o].budget; |
| **40** | D[o].wavelength = result[o].wavelength; |
| **41** | pred[o].pred = last_P; |
| **42** | pred[o].route = r_pred; |
| **43** | } |
| **44** | } |
| **45** | } |
| **46** | for (k = 1 ; k <= n; k++) { |
| **47** | if ( P[k].weight == 0 && |
| **48** | ( D[last_P].weight+ W[last_P][k].weight < |
| **49** | D[k].weight ) && |
| **50** | ( ( W[last_P][k].iscd & tech) != 0 ) && |
| **51** | ( D[last_P].budget+ W[last_P][k].budget < |
| **52** | MAX_BUDGET ) && |
| **53** | ( ( N[last_P][k].restConn == 0) \| \| |
| **54** | ( W[last_P][k].restConn == |
| **55** | pred[last_P].pred) ) && |
| **56** | ( ( D[last_P].wavelength & |
| **57** | W[last_P][k].wavelength) != 0 ) ) |
| **58** | { |
| **59** | D[k].weight = D[last P].weight + |
| **60** | W[last_P][k].weight; |
| **61** | D[k].budget = D[last_P].budget + |
| **62** | W[last_P][k].budget; |
| **63** | D[k].wavelength = D[last_P].wavelength & |
| **64** | W[last P][k].wavelength; |
| **65** | pred[k].pred = last_P; |
| **66** | if ( W[last_P][k].weight == 100) |
| **67** | D[k].budget = 0; |
| **68** | if ( D[k].budget < D[k].budget_b ) { |
| **69** | D[k].weight_b = D[k].weight; |
| **70** | D[k].budget_b = D[k].budget; |
| **71** | D[k].wavelength_b = D[k].wavelength; |
| **72** | pred[k].pred_b = pred[k].pred; |
| **73** | pred[k].route_b = pred; |
| **74** | } |
| **75** | } |
| **76** | } |
| **77** | least_D = 1+5* MAX_BUDGET; |
| **78** | for (j = 1 ; j <= n ; j++) { |
| **79** | if (P[j].budget == 0 && D[j].budget < least_D) |
| **80** | { |
| **81** | least D = D[j].budget; |
| **82** | next_P = j; |
| **83** | } |
| **84** | } |
| **85** | P[next P].budget= from; |
| **86** | last P = next_P; |
| **87** | for (k = 1 ; k <= n; k++) { |
| **88** | if ( P[k].budget == 0 && |
| **89** | ( D[last_P].budget_b + W[last_P][k].budget < |
| **90** | D[k].budget_b ) && |
| **91** | ( ( W[last_P][k].iscd & tech) != 0) && |
| **92** | ( D[last_P].budget_b+ W[last_P][k].budget |
| **93** | < MAX_BUDGET) && |
| **94** | ( ( W[last_P][k].restConn == 0) \| \| |
| **95** | ( W[last_P][k].restConn == |
| **96** | pred[last_P].pred_b ) ) && |
| **97** | ( ( D[last_P].wavelength_b & |
| **98** | W[last_P][k].wavelength) != 0 ) ) |
| **99** | { |
| **100** | D[k].weight_b = D[last_P].weight_b + |
| **101** | W[last_P][k].weight; |
| **102** | D[k].budget_b = D[last_P].budget_b + |
| **103** | W[last_P][k].budget; |
| **104** | D[k].wavelength_b = D[last_P].wavelength_b & |
| **105** | W[last_P][k].wavelength; |
| **106** | pred[k].pred_b = last_P; |
| **107** | if ( D[k].weight_b < D[k].weight) { |
| **108** | D[kj.weight = D[k].weight_b; |
| **109** | D[k].budget = D[k].budget_b; |
| **110** | D[k].wavelength = D[k].wavelength_b; |
| **111** | pred[k].pred = pred[k].pred_b; |
| **112** | pred[k].route = pred; |
| **113** | } |
| **114** | } |
| **115** | } |
| **116** | } |
| **117** | *r_route = pred; |
| **118** | return (D); |
| **119** | } |
| **120** | |

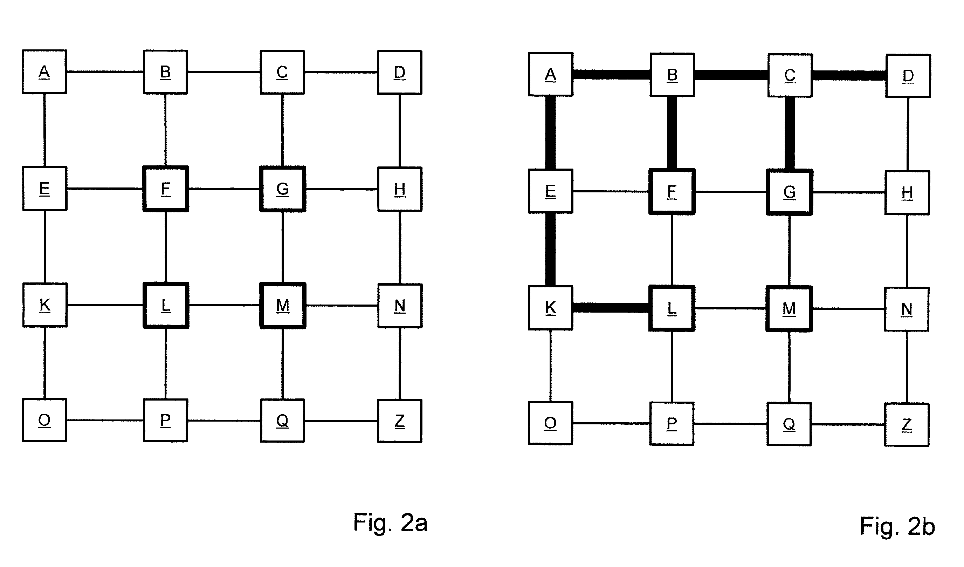

Figure 2a shows a schematic optical network with the first node A, the second node Z and intermediate nodes B to Q. A path request determines the first node A as the source node and the second node Z as the destination node. The nodes F, G, L and M are 3R capable nodes.
Figure 2b shows an open tree with open paths A-E-K-L, A-B-F, A-B-C-G, A-B-C-D, wherein the open paths are determined according to the first determination step. A first constraint, e.g. weight or budget, terminates the respective open paths. The open tree shows that the second node Z is not reached. The first constraint in this example is the maximum of three hops, wherein the signal has to be regenerated at the third hop. Node A can reach three 3R nodes, namely F, L and G.

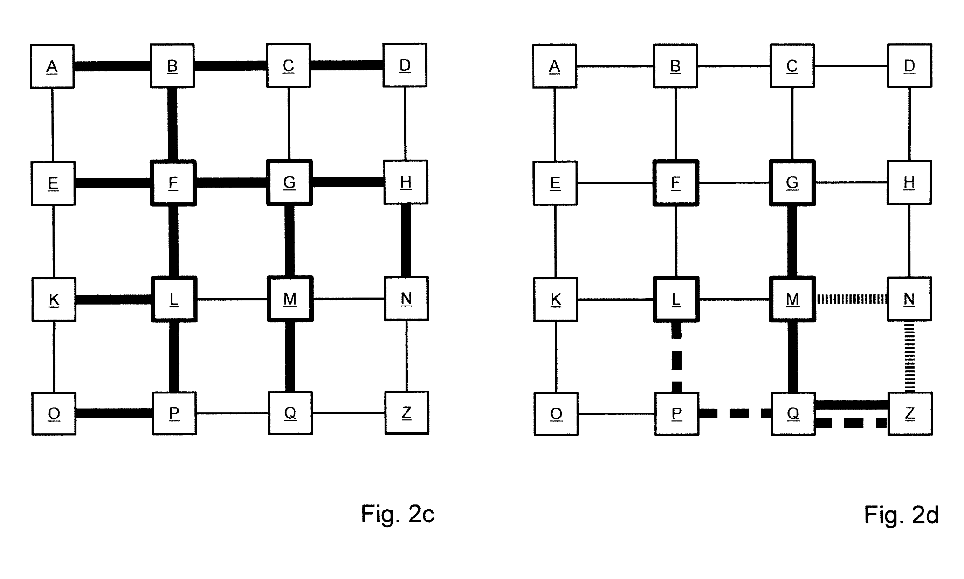

Figure 2c shows a further determination step starting from node F. The calculation of a further tree comprises further paths F-E, F-B-A, F-B-C-D, F-G-H-N, F-L-K, F-L-P-O, F-G-M-Q starting from the intermediate dedicated node F as a source node. The shown open paths do not reach the second node Z. From node F the 3R node M can be reached. New nodes are added to the original graph of A, here H, N, N, P, Q with F as a predecessor node. Similar determination steps as for node F are done for nodes L, G and M.
   A 3R node is considered comprising high metric cost and metric optimization prefers as less 3R nodes as possible. An additional server layer cost is added to the metric in line 33 of the code example in table 1.
Figure 2d shows three feasible reaching paths L-P-Q-Z with a metric of three links, G-M-Q-Z with a metric of three links, M-N-Z with a metric of two links each reaching the second node Z. These reaching paths are determined according to the second determination step and provide together with a respective open path a path from node A to Z. The reaching paths are objected to the same constraint as the open paths, namely a maximum of three hops. Applying the same constraint in the further or second determination step is a relaxation of the first constraint to a second constraint for the whole path 214 at the dedicated node due to the 3R capability. Consequently, the second node Z can be reached via the reaching path M-N-Z for example within the second constraint which is the double of the first constraint via double 3R costs.

Returning to figure 2c, from node F three potential feasible paths via node G, K and M use a 3R capable node. As 3R capability is a further metric and considered expensive, the number of 3R nodes is preferably reduced to a minimum.

F-G links and F-L links are not processed as there is a direct route from A to L and A to G as 3R cost is added. This avoids the recursive processing on those secondary 3R points.

A further path F-G together with a reaching path G-M-Q-Z starting by a further use of the 3R capability of node G comprises 1 link to G, and three links in the reaching path. A further path F-L together with a reaching path L-P-Q-Z starting by a further use of the 3R capability of node L comprises 1 link to F, and three links in the reaching path. A further path F-G-M together with a reaching path M-Q-Z starting by a further use of the 3R capability of node F comprises two links to M, and two links in the reaching path. The preceding further paths together with its respective reaching paths have comparable costs as consuming four links and one 3R capability of one 3R capable node.

In the following it is assumed that the further path F-G-M via M is chosen. The route with 3R points A-F-M-Z is used with the budget constraint of two links maximum only.

The path from node G to the second node Z is already stored as a result with a feasible path to the second node Z according to the open path A-B-C-G, the use of the 3R capability of node G and the reaching path G-M-Q-Z. The cost of this path results in the use of one 3R resource, and a total of 6 links.

In a further step a path from the open path A-E-K-L is combined with the reaching path L-P-Q-Z, which results in the use of total six links and one 3R resource.

Three potential paths were identified: a) open path A-B-F with further path F-L and with reaching path L-P-Q-Z; b) open path A-B-C-G with reaching path G-M-Q-Z; and c) open path A-E-K-L with reaching -path L-P-Q-Z. As path a) consumes two 3R resources paths b) and c) are preferred and have comparable costs. A corresponding implementation may complete a tree calculation in a recursive way, therefore completing the path a). A further implementation may follow the number of 3R resources not terminating the route calculation of path a). However, the further implementation would not allow recursive implementation.

Above path a) comprises the further open path F-L, which is determined according to a further determination step.

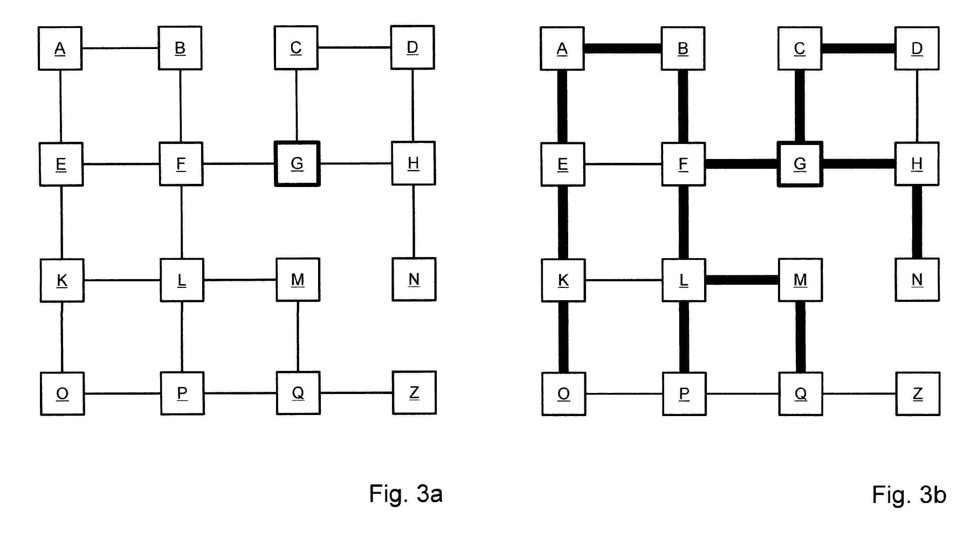

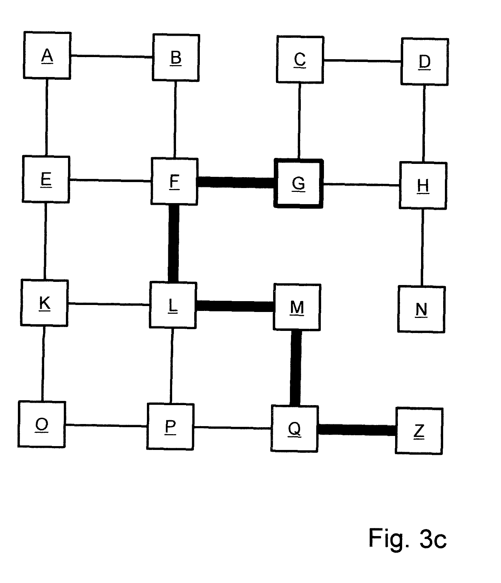

Figure 3a shows a further communication network with the nodes A to Q and Z connected in a different way than in figure 2a. Only node G provides a 3R capability. The example according to the following figures 3b and 3c allows a maximum of five hops.

Figure 3b shows an open tree with feasible open paths A-B-F-G-C-D, A-B-F-G-H-N, A-B-F-L-M-Q, A-B-F-L-P, A-E-K-O. A first constraint, namely the maximum hop number of three, terminates the first path without reaching the second node Z.

Figure 3c shows the reaching path G-F-L-M-Q-Z, in which the link between F-G is used twice in forward and reverse direction for the whole path made of the open path up to node G and the reaching path from node G to node Z. As signalling provides loop prevention, the whole path is set up in a hierarchical way. Therefore the open path from node A up to node G is established on a first level and the reaching path from node G to node Z is established on a second level.

Figure 4 shows a schematic multi-layer communication network of the first node A, the second node Z, and intermediate nodes B to G. The horizontal dotted lines are logical connections. The horizontal continuous solid lines are physical connections or links between the respective nodes. The vertical solid lines are layer transitions at a given node. As before, the first node A is the source node and the second node Z is the destination node to establish the path 216. Furthermore the nodes shown in figure 4 support different layers. For example the node B provides transmission functions B0, B1, B2 and B3 on all layers L0, L1, L2 and L3. L1 represents the client layer of L0; L0 represents the server layer of L1; the former being applicable to the layer pairs L1-L2, L2-L3. The node D on the other hand only provides transmission functions D1 and D2 on the layers L1 and L2. For illustrative purposes only the network in figure 4 only shows one path from node A to node Z. Of course, the network may comprise further nodes connected with a respective node shown on one layer. Therefore, a shortest and/or cheapest path is also determined on a respective layer L0-L3 even not shown in figure 4. The layers L0 to L3 may be layers according to the OSI/ISO model according to ITU-T X.200 (07/1994) or any rate depending layers.

The respective transmission functions may provide, horizontally, a connection on the same layer to a further node, like the transmission function D2 to E2. The respective transmission functions may also provide, vertically, a connection to the respective server and/or client layer. The transmission function B2 for example, may transmit and receive data to and from its server layer transmission function B1 and may transmit and receive data to and from its client layer transmission function B3. On the other hand the transmission function A3 does not have a transmission function on another layer as L3 on the same node A.

Each node A to Z in figure 4 which comprises at least two transmission functions on a different layer, respectively, is a dedicated node and provides a transition and transmission of data from one layer to another.

A reaching path G-Z between the transmission functions G0 and Z0 has a preceding open path F-G between the transmission functions F2 and G2. The first open path A-B is established between the transmission functions A3 and B3 on the layer L3.

As node B has no direct feasible link to node Z the transmission function B3 is logically connected to transmission function B2, B2 is connected to B1 and B1 is connected to B0. The transmission function B0 can establish a path to transmission function C0 of node C. The path between B0 and C0 on layer L0 establishes a logical connection between the transmission functions B1 and C1. Figure 4 therefore illustrates a multi-layer routing method according to this disclosure.

A further metric is the respective number of server layers. As the use of server layers is considered with high expenses or costs, a server layer is associated with a higher number as the respective client layer. Therefore, the method would consider to use links in the current layer or even prefer to use a transition to a respective client layer, as the client layers are considered cheaper.

In an exemplary embodiment according to a path request in layer L1 one or more paths are calculated in layer L1 as long there are pending L1 topology links. The links with transitions to layer L0 are determined. If no path reaching the destination node can be found at layer L1 at least one of the determined transitional links to layer L0 is used to get to the destination. At a transitional link to L0 a further path request is issued to get to the destination node. The resulting path is added to the calculated L1 path, if the path is new and cheaper. If the destination node is reached, no further steps have to be done. If the destination node is still not reached in the layer L0, at least one link back to the layer L1 is determined. Therefore, back in the layer L1 the path determination is continued to get to the destination node. It might be necessary to get multiple times to layer L0 and layer L1 to get to the destination node. An example is routing transparent services across a network like a TDM (Time Division Multiplex) network or a WDM (Wavelength Division Multiplexing) network as a carrier network to link the respective services together. The transition between the layers L1 and L0 is used at least for two purposes: First, within the layer L1 it is determined a gateway to the layer L0 that can be used for server layer routing; Second, within layer L0 it is determined a transition back to the client layer L1 where the client layer can continue. The resulting path in layer L0 is merged back into the path in layer L1. It is verified that no better path to the destination node in layer L1 is feasible. Therefore, new nodes and/or links are available in layer L1 to be processed. The resulting hops are added from layer L0. The procedure may be repeated for multiple hierarchies with clear hierarchy levels, e.g. L0, L1, L2, L3, wherein level L0 represents the lowest possible level.

Therefore, it is provided a method to find a shortest path in multi-layer networks across a plurality of layers.

Of course the embodiments shown in the respective figures can be combined. Especially, the methods with the open path and reaching path can be combined with the methods incorporating the first and second metrics.

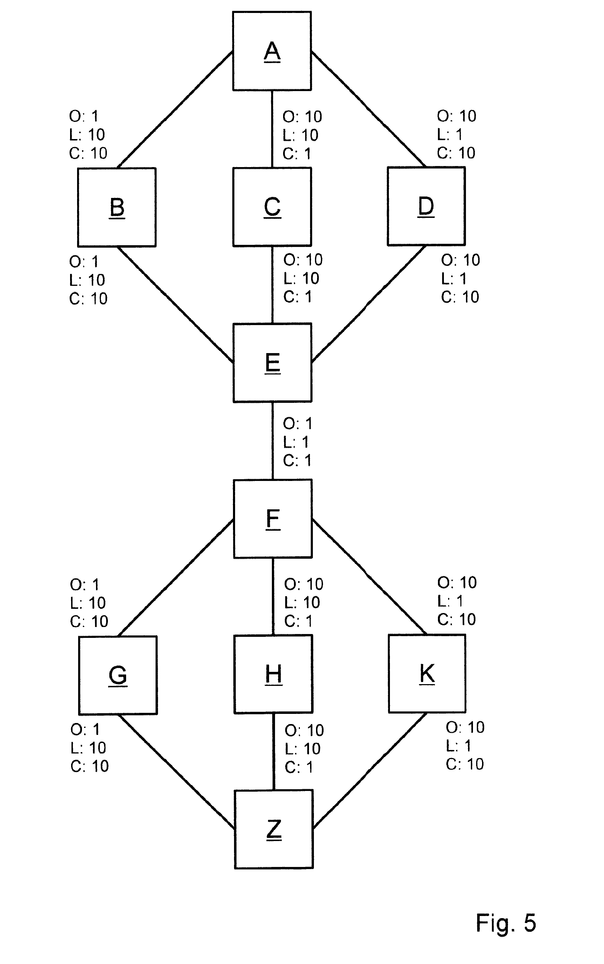

Figure 5 shows a schematic communication network with a first node A, a second node Z and intermediate nodes B to K. Three metrics are assigned to each link between the nodes A to K and Z: the optical reach 0, the latency L and the admin cost C. As smaller the numbers are, the better the respective metric.

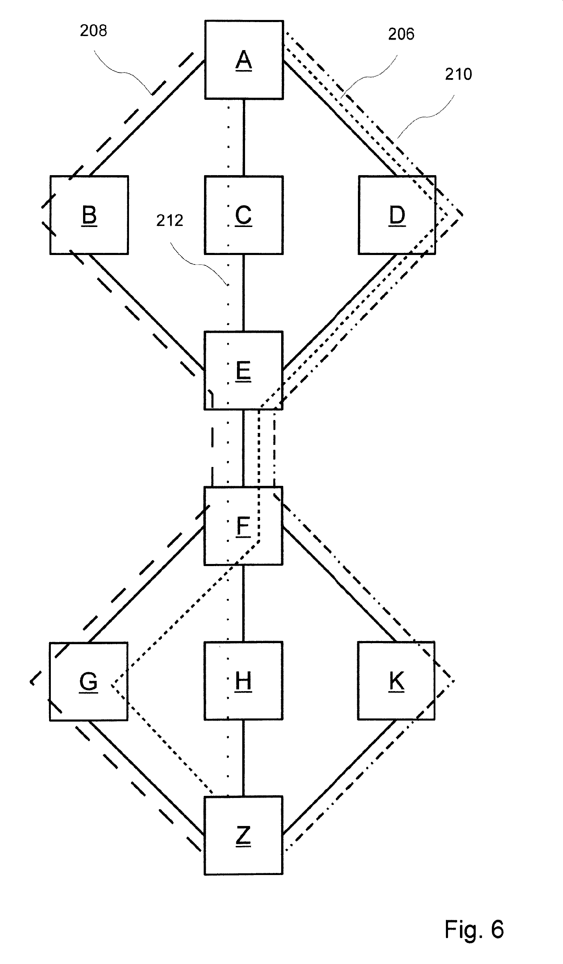

Figure 6 shows shortest paths 208, 210 and 212 from the first node A to the second node Z according to the respective metric optical reach 0, latency L and admin cost C. The communication path 206 is determined according to the present disclosure incorporating three metrics.

The following table 2 illustrates the respective steps following a request to find a path from the first node A to the second node Z. A "*" stands for a taken path or route. A "F" stands for a failed path or route. Each line of a table entry consists of optical reach, latency, metric, and accumulated values in addition to tentatively processed. Each row of a table entry consists of a value optimized for optical reach, a value optimized for metric and a value optimized for latency.

For example, the K-Z link below may comprise the following values:

| | SO | SM | SL | t |
|---|---|---|---|---|
| Optical reach optimized sub-vector | 31 | 13 | 22 | 0 |
| Metric optimized sub-vector | 13 | 31 | 22 | 1 |
| Latency optimized sub-vector | 31 | 31 | 4 | 0 |

SM is the accumulated value for summary metric. SO is the accumulated value for summary optical reach. SL is the accumulated value for summary latency. And t is the tentatively to be processed if zero for each sub-vector.

A feasible path from A to Z, in contrast to the paths 208, 210 and 212, should not pass a maximum for the latency of 25 and a maximum for the optical reach of 25.

**Table 2**

| | link | vector for optimizing for optical reach | link | vector for optimizing for cost | link | vector for optimizing for latency |
|---|---|---|---|---|---|---|
| | A-B | 10,1,10,0 | A-C | 1,10,10,0 | A-D | 10,10,1,0 |
| | | 10,1,10,0 | | 1,10,10,0 | | 10,10,1,0 |
| | | 10,1,10,0 | | 1,10,10,0 | | 10,10,1,0 |
| 1^{st} loop | A-B | 10,1,10,0 | A-C | 1,10,10,1* | A-D | 10,10,1,0 |
| | | 10,1,10,1* | | 1,10,10,0 | | 10,10,1,0 |
| | | 10,1,10, | | 1,10,10,0 | | 10,10,1, |
| | B-E | 20,2,20,0 | C-E | 2,20,20,0 | D-E | 20,20,2,0 |
| | | 20,2,20,0 | | 2,20,20,0 | | 20,20,2,0 |
| | | 20,2,20,0 | | 2,20,20,0 | | 20,20,2,0 |
| 2^{nd} loop | B-E | 20,2,20,0 | C-E | 2,20,20,1* | D-E | 20,20,2,0 |
| | | 20,2,20,1* | | 2,20,20,0 | | 20,20,2,0 |
| | | 20,2,20,0 | | 2,20,20,0 | | 20,20,2,1* |
| | E-F | 20,2,20,0 | E-F | 20,2,20,0 | E-F | 20,2,20,0 |
| | | 20,2,20,0 | | 3,21,21,0 | | 3.21,21,0 |
| | | 20,2,20,0 | | 20,2,20,0 | | 21,21,3,0 |
| 3^{rd} loop | E-F | 21,3,21,0 | E-F | 21,3,21,1* | E-F | 21,3,21,1 |
| | | 21,3,21,1* | | 3,21,21,1 | | 3,21,21,1 |
| | | 21,21,3,0 | | 21,21,3,0 | | 21,21,3,1* |
| | F-G | 22,13,31,0 | F-H | 31,4,31,0F | F-K | 31,13,22,0F |
| | | 4,31,31,OF | | 13.22,31,0 | | 13,31,22,0 |
| | | 22,31,13,0 | | 31,22,13,0 | | 31,31,4,0F |
| 4^{th} loop | F-K | 31,13,22,OF | | | F-G | 22,13,31,0F |
| | | 13,31,22,1* | | | | 4, 31,31,0F |
| | | 31,31,4,0F | | | | 22,31,13,1* |
| | K-Z | - | | | G-Z | - |
| | | 23,41,23,0 | | | | - |
| | | - | | | | 23,41,23,0 |

For the fourth loop after the last line of the third loop in table 2 the result is outlined in the following. An optimization for optical reach would verify the links A-C, A-D, C-E and D-E and results in no better path for optical reach to node F. An optimization for cost would verify the links A-B, A-D, B-E, D-E and results in no better path for cost to node F. An optimization for latency would verify the links A-B, A-C, B-E and C-E and results in no better path for latency to node F. At this point there is a best optical reach, a best latency and a best latency route to get to node F. Subsequent routes for optimization fails: F-G optical reach optimize failed due to latency; F-K latency optimized failed due to optical reach; F-H fails for any route either due to optical reach or latency. The next and last potential routes take the result from latency optimized route A-D-E-F and continue on F-G, and take the optical reach optimized route A-B-E-F and continue on F-K. Consequently, only two potential links to follow: F-G for latency optimized and F-K for optical reach optimized. Two potential paths are determined: path 210 according to A-D-E-F-G-Z and a further path A-B-E-F-K-Z. As the cost vector is the same for both paths one of them has to be chosen.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. Method to operate a communication network, wherein a first node (A) is connected via a plurality of intermediate nodes (B-K) with a second node (Z), wherein a connection is associated with a first metric (202; weight) and a second metric (204; budget), respectively,
the method comprising:
determining (1-200) a communication path (206) from the first node (A) to the second node (Z) along the intermediate nodes (B-K) by feeding (68-74) results from a first optimization step (10-76) regarding the first metric (202; weight) to a second optimization step (77-115) regarding the second metric (204; budget) and feeding (107-113) results from the second optimization step (77-115) regarding the second metric (204; budget) to the first optimization step (77-115) regarding the first metric (202; weight).

2. The method according to claim 1, the method comprising: transferring payload data from the first node (A) to the second node (Z) along the path (210).

3. The method according to claim 1 or 2, wherein the connection is arranged between two nodes (A-K, Z) or the connection is arranged between two links connected by a respective node (A-K, Z).

4. The method according to one of the preceding claims, the method comprising:
a first update step (10-76) and a second update step (77-116), wherein the first and second update step (10-76, 77-116) are executed (9) in a sequence until all nodes (A-Z) reachable from the first node (A) are labelled permanent for the first metric (weight) and/or the second metric (budget).

5. The method according to one of the preceding claims, wherein the feeding (68-74) of the results of the first optimization step (10-76) to the second optimization step (77-115) comprises:
updating (69) a third cost (D[k].weight_b) of the first metric (202; weight) depending on a comparison (68) of a second and a fourth cost (D[k].budget, D[k].budget_b) of the second metric (204; budget) in the first update step (10-76), and/or
wherein the feeding (107-113) of the results of the second optimization step (77-115) to the first optimization step (10-76) comprises:
updating (109) the second cost (D[k].budget) of the second metric (204; budget) depending on a comparison (107) of a first and the third cost (D[k].weight, D[k].weight_b) of the first metric (202; weight) in the second update step (77-116).

6. The method according to one of the preceding claim, wherein the first update step (10-76) comprises the steps c) and d):
step c): determining (59) the first cost (D[k].weight) according to the first metric (weight);
step d): determining (61) the second cost (D[k].budget) according to the second metric (budget); and
wherein the second update step (77-116) comprises the steps h) and i):
step h): determining (100) the third cost (D[k].weight_b) according to the first metric (weight);
step i): determining (102) the fourth cost (D[k].budget_b) according to the second metric (budget).

7. The method according to claim 5 or 6, the method comprising:
the first update step (10-76) comprising at least one of the following steps a) to e); and the second update step (77-116) comprising at least one of the following steps f) to k);
step a): selecting (10-19) the working node (last_P) according to the first metric (weight) and continue with step b);
step b) executing (46) for each adjacent node (k) adjacent to the working node (last_P) the steps c), d) and e), wherein the adjacent node (k) is labelled (47) tentatively, and continue with step f);
step e): determining (65) the working node (last_P) as a first predecessor (pred[k].pred) for the adjacent node (k);
step f): selecting (77-86) the working node (last_P) according to the second metric (budget) and continue with step g);
step g): executing (87) for each adjacent node (k) adjacent to the working node (last_P) the steps h), i) and k), wherein the adjacent node (k) is labelled (47) tentatively, and continue with step the first update step (10-76) for the next working node (last_P);
step k): determining (106) the working node (last_P) as a second predecessor (pred[k].pred_b) for an adjacent node (k).

8. The method according to claim 5, 6 or 7, the first update step (10-76) comprising:
setting (69) the value of the third cost (D[k]_weight_b) to the value of the first cost (D[k]_weight) depending on a comparison (68) of the second cost (D[k].budget) and the fourth cost (D[k].budget_b); and/or
setting (70) the value of the fourth cost (D[k].budget_b) to the value of the second cost (D[k].budget) depending on a comparison (68) of the second cost (D[k].budget) and the fourth cost (D[k].budget_b; and/or
determine (72) the working node (last_P) as the second predecessor (pred[k].pred_b) for an adjacent node (k) depending on a comparison (68) of the second cost (D[k].budget) and the fourth cost (D[k].budget_b.

9. The method according to claim 5 or 8, wherein the comparison (68) comprises: the fourth cost (D[k].budget) is greater than the second cost (D[k].budget_b).

10. The method according to claim 6 or 7, the second update step (77-116) comprising:
setting (108) the value of the first cost (D[k].weight) to the value of the third cost (D[k].weight_b) depending on a comparison (107) of the first cost (D[k].weight) and the third cost (D[k].weight_b); and/or
setting (109) the value of the second cost (D[k].budget) to the value of the fourth cost (D[k].budget_b) depending on a comparison (107) of the first cost (D[k].weight) and the third cost (D[k].weight_b); and/or
determine (111) the working node (last_P) as the first predecessor (pred[k].pred) for an adjacent node (k) depending on a comparison (107) of the first cost (D[k].weight) and the third cost (D[k].weight_b).

11. The method according to claim 5 or 10, wherein the comparison (107) comprises: the first cost (D[k].weight) is greater than the third cost (D[k].weight_b).

12. The method according to one of the claims 7 to 11, wherein the step a) comprises step a1) and/or step a2):
a1) selecting (1; 10-19) the first node (A) as a working node (last_P) and continue with step b),
a2) selecting (10-19) a node (B-K) from a set of at least one, for the first metric (weight) tentatively labelled nodes (j) with the cheapest first cost (weight) as the new working node (last_P) and continue with step b); and/or
wherein step b) is executed if at least one of the statements b1) to b5) is true:
b1) the first cost (D[k].weight) of the adjacent node (k) is greater than (48, 49) the sum of the cost (D[last_P].weight) from the first node (A) to the working node (last_P) according to the first metric (weight) and the cost (W[last_P][k].weight) between the working node (last_P) and the adjacent node (k) according to the first metric (weight), and/or
b2) the link between the working node (last_P) and the adjacent node (k) supports (50; 91) a required technology, and/or
b3) the constraint (max_budget) for the second metric (budget) is greater than or equal (51, 52; 92, 93) the sum of the second or fourth cost (D[last_P].budget; D[last_P].budget_b) of the working node (last_P) and the cost (W[last_P][k].budget) between the working node (last_P) and the adjacent node (k) according to the second metric (budget), and/or
b4) no restricted connectivity (53-55; 94-96), and/or b5) the path from the first node (A) to the working node (last_P) and the link between the working node (last_P) and the adjacent node (k) provide (56, 57; 97, 98) the same wavelength; and/or
wherein step f) comprises the step f1):
step f1) selecting (77-86) a node (B-K) from a set of at least one, for the second metric (budget) tentatively labelled nodes (B-K) with the cheapest second metric (budget) as the new working node (last_P) and continue with step f); wherein step g) is executed if at least one of the statements g1), b2) to b5) is true:
g1) the fourth cost (D[k].budget_b) of the adjacent node (k) is greater than (89, 90) the sum of the fourth cost (D[last_P].budget_b) from the first node (A) to the working node (last_P) according to the second metric (budget) and the cost (W[last_P][k].budget) between the working node (last_P) and the adjacent node (k) according to the second metric (budget).

13. The method according to one of the preceding claims, wherein the first and third cost (D[k].weight, D[k].weight_b) is determined according to the first metric (weight) from the respective working or adjacent node (last_P; k) to the first node (A), and wherein the second and fourth cost (D[k].budget, D[k].budget_b) is determined according to the second metric (budget) from the respective working or adjacent node (last_P; k) to the first node (A).

14. The method according to one of the preceding claims, wherein the path (210) from the first node (A) to the second node (Z) is determined starting with the second node (Z) and traversing the path (210) according to the respective first predecessor (pred[k].pred) for each node (B-Z) until reaching the first node (A).

15. A network node configured to execute the method according to one of the preceding claims.

## Amended claims

### Amended claims in accordance with Rule 137(2) EPC.

1. Method to operate a communication network, wherein a first node (A) is connected via a plurality of intermediate nodes (B-K) with a second node (Z), wherein a connection is associated with a first metric (202; weight) and a second metric (204; budget), respectively,
the method comprising:
determining (1-200) a communication path (206) from the first node (A) to the second node (Z) along the intermediate nodes (B-K) by feeding (68-74) results from a first optimization step (10-76) regarding the first metric (202; weight) to a second optimization step (77-115) regarding the second metric (204;
budget) and feeding (107-113) results from the second optimization step (77-115) regarding the second metric (204; budget) to the first optimization step (77-115) regarding the first metric (202; weight), wherein the first optimization step (10-76) and the second optimization step (77-115) are executed in a sequence for each node (i).

2. The method according to claim 1, the method comprising: transferring payload data from the first node (A) to the second node (Z) along the path (210).

3. The method according to claim 1 or 2, wherein the connection is arranged between two nodes (A-K, Z) or the connection is arranged between two links connected by a respective node (A-K, Z).

4. The method according to one of the preceding claims, the method comprising:
a first update step (10-76) and a second update step (77-116), wherein the first and second update step (10-76, 77-116) are executed (9) in a sequence until all nodes (A-Z) reachable from the first node (A) are labelled visited for the first metric (weight) and/or the second metric (budget).

5. The method according to one of the preceding claims, wherein the feeding (68-74) of the results of the first optimization step (10-76) to the second optimization step (77-115) comprises:
updating (69) a third cost (D[k].weight_b) of the first metric (202; weight) depending on a comparison (68) of a second and a fourth cost (D[k].budget, D[k].budget_b) of the second metric (204; budget) in the first update step (10-76), and/or
wherein the feeding (107-113) of the results of the second optimization step (77-115) to the first optimization step (10-76) comprises:
updating (109) the second cost (D[k].budget) of the second metric (204; budget) depending on a comparison (107) of a first and the third cost (D[k].weight, D[k].weight_b) of the first metric (202; weight) in the second update step (77-116).

6. The method according to one of the preceding claim, wherein the first update step (10-76) comprises the steps c) and d):
step c): determining (59) the first cost (D[k].weight) according to the first metric (weight);
step d): determining (61) the second cost (D[k].budget) according to the second metric (budget);
and
wherein the second update step (77-116) comprises the steps h) and i):
step h): determining (100) the third cost (D[k].weight_b) according to the first metric (weight);
step i): determining (102) the fourth cost (D[k].budget_b) according to the second metric (budget).

7. The method according to claim 5 or 6, the method comprising:
the first update step (10-76) comprising at least one of the following steps a) to e); and the second update step (77-116) comprising at least one of the following steps f) to k);
step a): selecting (10-19) the working node (last_P) according to the first metric (weight) and continue with step b);
step b) executing (46) for each adjacent node (k) adjacent to the working node (last_P) the steps c), d) and e), wherein the adjacent node (k) is labelled (47) not visited, and continue with step f);
step e): determining (65) the working node (last_P) as a first predecessor (pred[k].pred) for the adjacent node (k);
step f): selecting (77-86) the working node (last_P) according to the second metric (budget) and continue with step g);
step g): executing (87) for each adjacent node (k) adjacent to the working node (last_P) the steps h), i) and k), wherein the adjacent node (k) is labelled (47) not visited, and continue with step the first update step (10-76) for the next working node (last_P);
step k): determining (106) the working node (last_P) as a second predecessor (pred[k].pred_b) for an adjacent node (k).

8. The method according to claim 5, 6 or 7, the first update step (10-76) comprising:
setting (69) the value of the third cost (D[k]_weight_b) to the value of the first cost (D[k]_weight) depending on a comparison (68) of the second cost (D[k].budget) and the fourth cost (D[k].budget_b); and/or
setting (70) the value of the fourth cost (D[k].budget_b) to the value of the second cost (D[k].budget) depending on a comparison (68) of the second cost (D[k].budget) and the fourth cost (D[k].budget_b; and/or
determine (72) the working node (last_P) as the second predecessor (pred[k].pred_b) for an adjacent node (k) depending on a comparison (68) of the second cost (D[k].budget) and the fourth cost (D[k].budget_b.

9. The method according to claim 5 or 8, wherein the comparison (68) comprises: the fourth cost (D[k].budget) is greater than the second cost (D[k].budget_b).

10. The method according to claim 6 or 7, the second update step (77-116) comprising:
setting (108) the value of the first cost (D[k].weight) to the value of the third cost (D[k].weight_b) depending on a comparison (107) of the first cost (D[k].weight) and the third cost (D[k].weight_b); and/or
setting (109) the value of the second cost (D[k].budget) to the value of the fourth cost (D[k].budget_b) depending on a comparison (107) of the first cost (D[k].weight) and the third cost (D[k].weight_b); and/or
determine (111) the working node (last_P) as the first predecessor (pred[k].pred) for an adjacent node (k) depending on a comparison (107) of the first cost (D[k].weight) and the third cost (D[k].weight_b).

11. The method according to claim 5 or 10, wherein the comparison (107) comprises: the first cost (D[k].weight) is greater than the third cost (D[k].weight_b).

12. The method according to one of the claims 7 to 11, wherein the step a) comprises step a1) and/or step a2):
a1) selecting (1; 10-19) the first node (A) as a working node (last_P) and continue with step b),
a2) selecting (10-19) a node (B-K) from a set of at least one, for the first metric (weight) as not visited labelled nodes (j) with the cheapest first cost (weight) as the new working node (last_P) and
continue with step b); and/or
wherein step b) is executed if at least one of the statements b1) to b5) is true:
b1) the first cost (D[k].weight) of the adjacent node (k) is greater than (48, 49) the sum of the cost (D[last_P].weight) from the first node (A) to the working node (last_P) according to the first metric (weight) and the cost (W[last_P][k].weight) between the working node (last_P) and the adjacent node (k) according to the first metric (weight), and/or
b2) the link between the working node (last_P) and the adjacent node (k) supports (50; 91) a required technology, and/or
b3) the constraint (max_budget) for the second metric (budget) is greater than or equal (51, 52; 92, 93) the sum of the second or fourth cost (D[last_P].budget;
D[last_P].budget_b) of the working node (last_P) and the cost (W[last_P][k].budget) between the working node (last_P) and the adjacent node (k) according to the second metric (budget), and/or
b4) no restricted connectivity (53-55; 94-96), and/or
b5) the path from the first node (A) to the working node (last_P) and the link between the working node (last_P) and the adjacent node (k) provide (56, 57; 97, 98) the same wavelength; and/or
wherein step f) comprises the step f1):
step f1) selecting (77-86) a node (B-K) from a set of at least one, for the second metric (budget) as not visited labelled nodes (B-K) with the cheapest second metric (budget) as the new working node (last_P) and continue with step f);
wherein step g) is executed if at least one of the statements g1), b2) to b5) is true:
g1) the fourth cost (D[k].budget_b) of the adjacent node (k) is greater than (89, 90) the sum of the fourth cost (D[last_P].budget_b) from the first node (A) to the working node (last_P) according to the second metric (budget) and the cost
(W[last_P][k].budget) between the working node (last_P) and the adjacent node (k) according to the second metric (budget).

13. The method according to one of the preceding claims, wherein the first and third cost (D[k].weight, D[k].weight_b) is determined according to the first metric (weight) from the respective working or adjacent node (last_P; k) to the first node (A), and wherein the second and fourth cost (D[k].budget, D[k].budget_b) is determined according to the second metric (budget) from the respective working or adjacent node (last_P; k) to the first node (A).

14. The method according to one of the preceding claims, wherein the path (210) from the first node (A) to the second node (Z) is determined starting with the second node (Z) and traversing the path (210) according to the respective first predecessor (pred[k].pred) for each node (B-Z) until reaching the first node (A).

15. A network node configured to execute the method according to one of the preceding claims.
